Europäisches Patentamt

European Patent Office

Office européen des brevets

(11) Publication number: **0 108 816**
**A1**

# EUROPEAN PATENT APPLICATION

(21) Application number: **82109772.2**

(22) Date of filing: **22.10.82**

(51) Int. Cl.³: **H 04 B 7/10**, **H 01 Q 21/24**

(43) Date of publication of application: **23.05.84**
Bulletin 84/21

(84) Designated Contracting States: **BE CH DE FR GB LI NL**

(71) Applicant: **International Standard Electric Corporation, 320 Park Avenue, New York New York 10022 (US)**

(72) Inventor: **Lee, William Chien-Yeh, 9 Hickory Road, Denville New Jersey (US)**

(74) Representative: **Graf, Georg Hugo, Dipl.-Ing. et al, c/o Standard Elektrik Lorenz AG Patent- und Lizenzwesen Postfach 300 929 Kurze Strasse 8, D-7000 Stuttgart 30 (DE)**

(54) **A field component diversity antenna arrangement.**

(57) The antenna arrangement comprises at least a first pair of spaced elemental antenna elements (2, 3) to receive a transmitted signal in a multipath fading environment having uncorrelated electric field and magnetic field components and a hybrid circuit (6) coupled to the first pair of spaced antenna elements to provide a first output signal proportional to the electric field components (E) and a second output signal proportional to the magnetic field component (H). The spaced elemental antenna elements may be monopole elements or dipole elements.

## A FIELD COMPONENT DIVERSITY ANTENNA ARRANGEMENT
### Background of the Invention

The present invention relates to antenna arrangements and more particularly to a diversity antenna arrangement to receive a transmitted signal in a multipath fading environment.

In the HF (high frequency) and VHF (very high frequency) range, space diversity and angle-arrival diversity need either many spaced antennas or a large size directional antenna which are often not very practical because of the large wavelength in this frequency range. Polarization diversity has a 3.0 dB (decibel) power degradation by using two polarized transmitting antennas for diversity purposes.

### Summary of the Invention

An object of the present invention is to provide a simple diversity antenna arrangement for utilization in the HF and VHF frequency range.

Another object of the present invention is to provide a simple field component diversity antenna arrangement for the HF and VHF frequency range.

A feature of the present invention is the provision of a field component diversity antenna arrangement to receive uncorrelated electric field and magnetic field components of a transmitted signal in a multipath fading environment comprising: at least a first pair of spaced elemental antenna elements disposed to receive the transmitted signal; and a first hybrid circuit coupled to the first pair of spaced antenna elements to provide a first output signal proportional to the electric field component and a second output signal proportional to the magnetic field component.

Usually a dipole antenna is used to receive an electric wave and a loop antenna is used to receive a magnetic field. In accordance with the principles of the present invention an antenna arrangement will be employed which can receive both the electric field and the magnetic field at the same time. Based upon a multipath fading or reflection phenomena at a sky wave, it has been proved that the electric field component and the magnetic field component are received uncorrelated in a troposcatter communication link or other fading environments.

The reason for using the field component diversity antenna arrangement is that the separation of elemental antenna elements can be much smaller than that required in usual space diversity. The implementation of this type of antenna is simple and the signal performance due to this diversity antenna arrangement is effective especially at the HF and VHF frequency range.

Brief Description of the Drawing

Above-mentioned and other features and objects of this invention will become more apparent by reference to the following description taken in conjunction with the accompanying drawing, in which:

Fig. 1 is an illustration of a field component diversity antenna arrangement in accordance with the principles of the present invention in a multipath fading environment;

Fig. 2 is a top view of one embodiment of a practical field component diversity antenna arrangement in accordance with the principles of the present invention;

Fig. 3 is a perspective view of the antenna of Fig. 2;

Fig. 4 is another embodiment of the field component diversity antenna arrangement in accordance with the principles of the present invention;

Fig. 5 is a third embodiment of a field component diversity antenna arrangement in accordance with the principles of the present invention;

Fig. 6 is a fourth embodiment of the field component diversity antenna arrangement in accordance with the principles of the present invention;

Fig. 7 is a fifth embodiment of the field component diversity antenna arrangement in accordance with the principles of the present invention; and

Fig. 8 is a graph useful in explaining the principle of the field component diversity antenna arrangement of the present invention.

## Description of the Preferred Embodiments

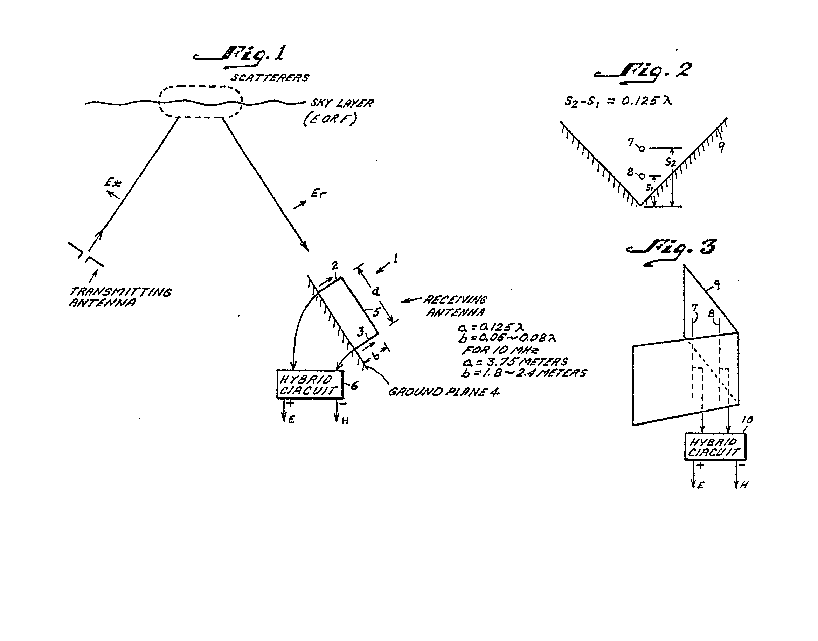

Referring to Fig. 1, there is illustrated therein a theoretical field component diversity antenna arrangement in a multipath fading environment. The theoretical field component diversity antenna arrangement 1 includes two elemental antenna elements 2 and 3 extending from a ground plane 4 spaced from each other a distance a and connected by a connecting member 5 to essentially form a loop. The output from each of the antenna elements 2 and 3 is coupled to a hybrid circuit 6 to obtain an electric field component output signal E by summing the two inputs to hybrid circuit 6 and to obtain a magnetic field component output signal H by subtracting one input thereto from the other input thereto.

The output signals E and H have been proven to be independent signals after passing through a multipath reflection or fading medium; see, for instance, an article by W.C.Y. Lee, Bell System Technical Journal, Vol. 46, page 417, February 1967. Once two independent signals are obtained, any kind of diversity combining techniques can be used to realize the advantage of the diversity scheme. Various combining techniques that can be employed are disclosed in the book by Schwartz, Bennett and Stein entitled "Communication Systems and Techniques", McGraw-Hill, 1966, pages 416 - 498.

The dimensions illustrated in Fig. 1 are for an operating frequency of 10 MHz (megahertz) and the hybrid circuit is an off-the-shelf item that is obtainable from a number of different manufacturers, for instance, Narda and Triplate.

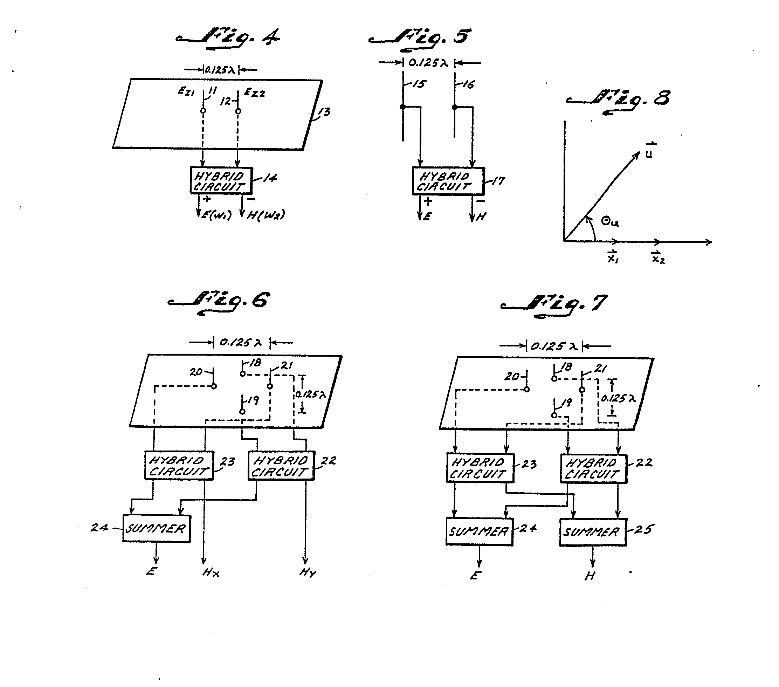

Figs. 2 and 3 illustrate one practical embodiment of the field component diversity antenna arrangement of the present invention. This embodiment is a corner reflector antenna having the two elemental antenna elements 7 and 8 spaced an amount $0.125\lambda$ (wavelength) at the operating frequency of the antenna in a cooperative association with a corner reflector 9. The elemental antenna elements 7 and 8 are dipole elements whose outputs are coupled to the hybrid circuit 10 to produce the E and H output signals.

Fig. 4 shows a second practical embodiment of the field component diversity antenna arrangement of the present invention including two monopole elemental antenna elements 11 and 12 in a cooperative relationship with a ground plane 13. Monopole antenna elements 11 and 12 are separated by $0.125\lambda$ and are connected to a hybrid circuit 14 to provide the E and H output signals.

Fig. 5 shows a third practical embodiment of the field component diversity antenna arrangement of the present invention including elemental dipole antenna elements 15 and 16 whose outputs are coupled to a hybrid circuit 17 to produce the E and H output signals.

Referring to Fig. 6, there is illustrated therein a fourth practical embodiment of the field component diversity antenna arrangement having two pairs of elemental antenna elements with the first pair of antenna elements 18 and 19 being oriented at right angles with respect to the second pair of antenna elements 20 and 21 with each of the elements of each of the pair of elements being spaced $0.125\lambda$ from each other. The output from antenna elements 18 and 19 are coupled to a hybrid circuit 22 and the output of antenna elements 20 and 21 are coupled to a hybrid circuit 23. Hybrid circuits 22 and 23 produce two components of the H output signal, namely, Hx and Hy components and two electric field component output signals which are combined in summer 24 to provide an E output signal.

Fig. 7 shows a modification of the embodiment of Fig. 6 wherein a second summer 25 is employed to combine the H signal components Hx and Hy to provide a H signal output from the antenna arrangement.

The embodiments shown in Figs 2 to 7 are particularly useful in mobile communications. For instance, at 30 MHz the wavelength is 10 meters. The separation for space diversity requires one half wavelength, i.e., 5 meters. It becomes impossible to mount two antennas separated 5 meters apart on the roof of a jeep or regular vehicle. For this reason, the field component diversity antenna arrangement has great merit. It only needs a separation of $0.125\lambda$ apart between the two antenna elements. Therefore, the two antenna elements need to be spaced only 1.25 meters apart. The embodiments of Figs. 6 and 7 are improvements in the embodiments of Figs. 2 - 5 to improve the efficiency thereof in mobile communication application but the advantage is still there in all of the embodiments, namely, the ability to provide separation between one or two pairs of antenna elements which can be accommodated on a jeep or other regular vehicles.

The principle of the field component diversity antenna arrangement of the present application will now be set forth. Assume that there are two electric fields, $Ez_1$ and $Ez_2$ expressed as:

$$(1) \quad Ez_1 = \sum_{u=1}^{N} A_u \exp(-j\beta \vec{u}.\vec{x}_1) = x_1 + jy_1$$

and

$$(2) \quad Ez_2 = \sum_{u=1}^{N} A_u \exp(-j\beta \vec{u}.\vec{x}_2) = x_2 + jy_2$$

where $A_u$ is a complex amplitude of an electric wave propagating at a direction $\vec{u}$, and $\vec{u}$ is a unit vector related to an angle $\theta_u$ between $\vec{u}$ and $\vec{x}$ as shown in Fig. 8. $\beta$ is the wave number and N is the number of wave arrivals. $Ez_1$ and $Ez_2$ can also be expressed in real and imaginary parts as shown in equations (1) and (2), respectively.

The two outputs $W_1$ and $W_2$ of a field component diversity antenna as shown in Fig. 4 can be expressed as:

(3)  $W_1 = Ez_1 + Ez_2 = (x_1 + x_2) + j(Y_1 + Y_2)$

(4)  $W_2 = Ez_1 - Ez_2 = (x_1 - x_2) = j(Y_1 - Y_2)$

The correlation of the two signals $W_1$ and $W_2$, is

$$\overline{W_1 W_2^*} = \overline{(x_1^2 - x_2^2)} + \overline{(y_1^2 - y_2^2)} + 2j(\overline{x_1 Y_2 - Y_1 x_2})$$

$$= 2j(\overline{x_1 Y_2 - Y_1 x_2})$$

$$= 0,$$

since

(5)  $\overline{x_1 Y_2} = \overline{Y_1 x_2} = 0$

can be proved by taking equations (1) and (2) and averaging the product terms as indicated in equation (5). Therefore, the two outputs $W_1$ and $W_2$ are uncorrelated.

Secondly, equations (3) and (4) will be examined. If $Ez_1$ and $Ez_2$ are highly correlated, then the mean value of $W_2, \overline{W}_2$ is much smaller than $\overline{W}_1$. There is no advantage in combining them even when $W_1$ and $W_2$ are uncorrelated. In order to keep $\overline{W}_1$ and $\overline{W}_2$ the same, it may be necessary to let the correlation of $Ez_1$ and $Ez_2$ be 0.5, as follows:

(6)  $P_{|Ez_1||Ez_2|}(x_1-x_2) = Jo^2 (\beta(x_1 - x_2)) = 0.5.$

From equation (6)

(7)  $Jo(\beta(x_1 - x_2)) = 0.707$

$\beta(x_1 - x_2) = 1.1$

$x_1 - x_2 = \frac{1.1}{2}\frac{\lambda}{\pi} = 0.175\lambda.$

Hence, from the theoretical analysis, the spacing between the two elemental antenna elements is $0.175\lambda$, but from the experimental results, the spacing between the elemental antenna elements is $0.125\lambda$, which is smaller than the theoretical value.

While I have described above the principles of my invention in connection with specific apparatus, it is to be clearly understood that this description is made only by way of example and not as a limitation to the scope of my invention as set forth in the objects thereof and in the accompanying claims.

I CLAIM:

1. A field component diversity antenna arrangement to receive uncorrelated electric field and magnetic field components of a transmitted signal in a multipath fading environment comprising:

at least a first pair of spaced elemental antenna elements disposed to receive said transmitted signal; and

a first hybrid circuit coupled to said first pair of spaced antenna elements to provide a first output signal proportional to said electric field component and a second output signal proportional to said magnetic field component.

2. An antenna according to claim 1, wherein each of said first pair of antenna elements has a length of 0.06 to 0.08 wavelengths at an operating frequency of said antenna and are separated from each other by 0.125 wavelengths at said operating frequency.

3. An antenna according to claims 1 or 2, wherein each of said first pair of antenna elements is a monopole element in operative association with a common ground plane.

4. An antenna according to claims 1 or 2, wherein each of said first pair of antenna elements is a dipole element.

5. An antenna according to claim 4, wherein each of said dipole elements is in an operative association with a corner reflector.

6. An antenna according to claim 1, further including a second pair of spaced elemental antenna elements oriented in a predetermined manner with respect to said first pair of antenna elements; and

a second hybrid circuit coupled to said second pair of antenna elements to provide a third output signal proportional to said electric field component and a fourth output signal proportional to said magnetic field component.

-9-

7. An antenna according to claim 6, wherein each of said first and second pair of antenna elements has a length of 9.06 to 0.08 wavelengths at an operating frequency of said antenna, each of said first pair of antenna elements is separated from each other by 0.125 wavelengths at said operating frequency and each of said second pair of antenna elements is separated from each other by 0.125 wavelengths.

8. An antenna according to claims 6 or 7, wherein each of said first and second pair of antenna elements is a monopulse antenna in operative association with a common ground plane.

9. An antenna according to claim 8, further including a first summer to combine said first and third output signals; and a second summer to combine said second and fourth output signals.

10. An antenna according to claim 8, further including a summer to combine said first and third output signals.

_Fig.1_

SCATTERERS

SKY LAYER
(E OR F)

Ex

Er

TRANSMITTING
ANTENNA

RECEIVING
ANTENNA

$a = 0.125\lambda$
$b = 0.06 \sim 0.08\lambda$
FOR 10 MHz
$a = 3.75$ METERS
$b = 1.8 \sim 2.4$ METERS

HYBRID
CIRCUIT

GROUND PLANE 4

E   H

_Fig.2_

$S_2 - S_1 = 0.125\lambda$

_Fig.3_

HYBRID
CIRCUIT

E   H

## Fig. 4

|→ 0.125λ ←|

$E_{Z1}$ 11  12 $E_{Z2}$

13

HYBRID CIRCUIT — 14

+  −

$E(W_1)$  $H(W_2)$

## Fig. 5

→| 0.125λ |←

15  16

HYBRID CIRCUIT — 17

+  −

E  H

## Fig. 8

$\vec{u}$

$\Theta_u$

$\vec{x_1}$  $\vec{x_2}$

## Fig. 6

→| 0.125λ |←

20  18  21

0.125λ

19

HYBRID CIRCUIT — 23   HYBRID CIRCUIT — 22

24 — SUMMER

E  $H_x$  $H_y$

## Fig. 7

→| 0.125λ |←

20  18  21

0.125λ

19

HYBRID CIRCUIT — 23   HYBRID CIRCUIT — 22

SUMMER — 24   SUMMER — 25

E  H

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-1 541 724 (WESTERN ELECTRIC)<br>* Figure 3 * | 1 | H 04 B 7/10<br>H 01 Q 21/24 |
| Y | US-A-4 217 591 (US ARMY)<br>* Figure 1; column 1, lines 37-50 * | 1,3 | |
| A | US-A-2 897 496 (O.M. WOODWARD)<br>* Figure 1 * | 5 | |
| A | US-A-3 475 756 (L.J. MARTINO)<br>* Column 1, lines 43-66 * | | |
| A | US-A-3 036 301 (J.B. WIESNER)<br>* Figure 1 * | | TECHNICAL FIELDS SEARCHED (Int. Cl. ³) |
| A | US-A-3 172 111 (L.D. BREETZ)<br>* Figure 1 * | | H 04 B 7/02<br>H 04 B 7/10<br>H 01 Q 21/24 |

The present search report has been drawn up for all claims

| Place of search | Date of completion of the search | Examiner |
|---|---|---|
| BERLIN | 18-05-1983 | BREUSING J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82